# EUROPÄISCHE PATENTSCHRIFT

(11) **EP 1 470 981 B1**
(45) Veröffentlichungstag und Bekanntmachung des Hinweises auf die Patenterteilung: **16.07.2008**
(21) Anmeldenummer: 04101653.6
(22) Anmeldetag: 21.04.2004
(51) Int. Cl.: B61C 15/10, B60B 39/08

(54) **Sandaustragseinrichtung an einem Schienenfahrzeug**
Sand spreader on a rail vehicle
Dispositif de sablage de véhicule ferroviaire

(30) Priorität: 22.04.2003 DE 10318289
(43) Veröffentlichungstag der Anmeldung: 27.10.2004
(73) Patentinhaber: Zeppenfeld Industrie-Verwaltungs-GmbH, 42549 Velbert (DE)
(72) Erfinder: Schäfen, Carsten, 44879 Bochum (DE)
(74) Vertreter: Grundmann, Dirk

(56) Entgegenhaltungen:
- EP-A- 0 656 292
- DE-C- 388 473
- GB-A- 663 674
- GB-A- 191 328 725

## Beschreibung

Die Erfindung betrifft eine Sandaustragseinrichtung gemäß Gattungsbegriff des Anspruchs 1.

Derartige Sandaustragseinrichtungen sind aus der GB 663 674 bzw. GB 28 725 vorbekannt. Die beiden Druckschriften beschreiben jeweils eine Sandaustragseinrichtung mit einem im Wesentlichen einen trichterförmigen Boden aufweisenden Vorratsbehälter. An der tiefsten Stelle des Vorratsbehälters befindet sich eine Saugdüsenanordnung. Mit dieser Saugdüsenanordnung soll der sich im Vorratsbehälter befindliche Sand angesaugt und durch eine Sandförderleitung vor die Räder des Schienenfahrzeuges befördert werden. Der das Ansaugen des Sandes bewirkende Druckluftstrom ist vertikal nach unten gerichtet. Bei der GB 28 725 besitzt ein Injektorraum, in den der Druckluftstrom eintritt, eine Trichterform. In die Trichteröffnung ragt eine Düse hinein. Die Trichteröffnung ist von einer Glocke umgeben, so dass ein lediglich im Bereich einer Speiseleitung unterbrochener Ringspalt ausbildet, durch welchen Sand bis in die Mündung der Injektoröffnung treten kann. Bei der aus der GB 663 674 bekannten Saugaustragseinrichtung befindet sich ebenfalls oberhalb der Injektoröffnung eine Düse, durch die Druckluft in dem sich trichterförmig öffnenden Injektorraum eintreten kann. Zwischen der Randkante der Öffnung des Injektorraumes und des Düsenkörpers befindet sich auch hier eine Spaltöffnung, durch die Sand in den Injektorraum treten kann.

Aus der DE 20217 390 mit Druckluft betriebene Sandstreuvorrichtung bekannt. Diese Schrift beschreibt einen Vorratsbehälter mit einem trichterförmigen Boden. Unterhalb der Bodenöffnung befindet sich eine Düsenanordnung mit einer Saugdüse womit der Sand aus dem Vorratsbehälter in eine Sandförderleitung geblasen werden kann.

Auch die DE 41 22 032 befasst sich mit einer Sandaustragseinrichtung. Dort soll Druckluft in den Vorratsbehälter eingeblasen werden.

Die DE 4114 515 beschreibt ebenfalls eine Sandstrahleinrichtung für Schienenfahrzeuge. Auch dort soll die Sandförderung mit Druckluft erfolgen.

Weitere Dosierungsvornchtungen für Besandungsanlagen gehen aus der DE 29 11 112, DE 22 07 450 und DE 101 05 525 hervor.

Ausgehend von dem eingangs genannten Stand der Technik liegt der Erfindung die Aufgabe zugrunde, eine gattungsgemäße Sandaustragseinrichtung funktionssicherer weiterzubilden.

Gelöst wird die Aufgabe durch die in den Ansprüchen angegebene Erfindung, wobei zunächst und im Wesentlichen vorgesehen ist, dass mehrere in Horizontalrichtung verlaufende Saugkanäle in den Injektionsraum münden. Der Anspruch 1 sieht ferner vor, dass der das Ansaugen des Sandes bewirkende Druckluftstrom vertikal nach unten gerichtet ist und in einem Abschnitt der Saugdüsenanordnung erzeugt wird, der sich innerhalb des Vorratsbehälters befindet. Zufolge dieser Anordnung besteht keine Gefahr, dass die Düse verstopft. Der Druckluftstrom ist in Pfeilrichtung gerichtet. Die Vorrichtung hat darüber hinaus wenig vorstehende Teile, da wesentliche Elemente der Saugdüsenanordnung innerhalb des Vorratsbehälters angeordnet sind. In einer Weiterbildung der Erfindung ist vorgesehen, dass der das Ansaugen des Sandes bewirkende Druckluftstrom in einen Injektionsraum mündet, der sich ebenfalls in dem sich innerhalb des Vorratsbehälters befindlichen Abschnittes der Düsenanordnung befindet. Dem Injektionsraum ist eine Verengung in Druckluftstromrichtung nachgeordnet. Diese Verengung liegt erfindungsgemäß etwa im Übergangsbereich des in den Vorratsbehälter ragenden Abschnitts der Saugdüsenanordnung zu dem aus dem Vorratsbehälter herausragenden Abschnittes der Saugdüsenanordnung. Dies bedeutet, dass es vorteilhaft ist, wenn zumindest der Injektionsraum vollständig innerhalb des Vorratsbehälters angeordnet ist. In einer Weiterbildung der Erfindung ist vorgesehen, dass der Injektionsraum Teil eines drehbar in einer Höhlung einliegenden Einsatzteiles mit Fenstern ist. Die Fenster fluchten mit den Saugkanälen. Durch Drehung des Einsatzteiles um seine Achse können die Fenster außer Fluchtlage zu den Saugkanälen gebracht werden. Hierdurch lässt sich der effektiv wirkende Querschnitt der Saugkanäle einstellen. Die Zuleitung der Druckluft erfolgt bevorzugt durch eine Druckluftzuleitung, die parallel zum Druckluftstrom verläuft. Die Saugdüsenanordnung ist vorzugsweise von einer Kegelkappe überfangen. Die kegelförmige Spitze weist dabei nach oben. Hierdurch kann der sich in dem Vorratsbehälter befindliche Sand über die Kegelmantelfläche abrutschen. Bevorzugt überfängt der Öffnungsrandabschnitt der Kegelhöhlung die Öffnungen der Saugkanäle. Hierdurch ist einem Verstopfen der Saugkanäle entgegengewirkt. So muss der Sand, wenn er durch die Kanäle gesaugt werden soll, zunächst nach oben angehoben werden. Dies erfolgt durch den von der Saugdüse erzeugten Unterdruck. Der Schlauchanschluss für die Druckluft, der vorzugsweise mit einem Kompressor verbunden wird, liegt in Horizontalrichtung. Der Schlauchanschluss für die Sandförderleitung liegt demgegenüber in Vertikalrichtung, so dass sich der Schlauch der Sandförderleitung in Fallrichtung an die Düsenanordnung anschließt.

Ein Ausführungsbeispiel der Erfindung wird nachfolgend anhand beigefügter Zeichnungen erläutert. Es zeigen:

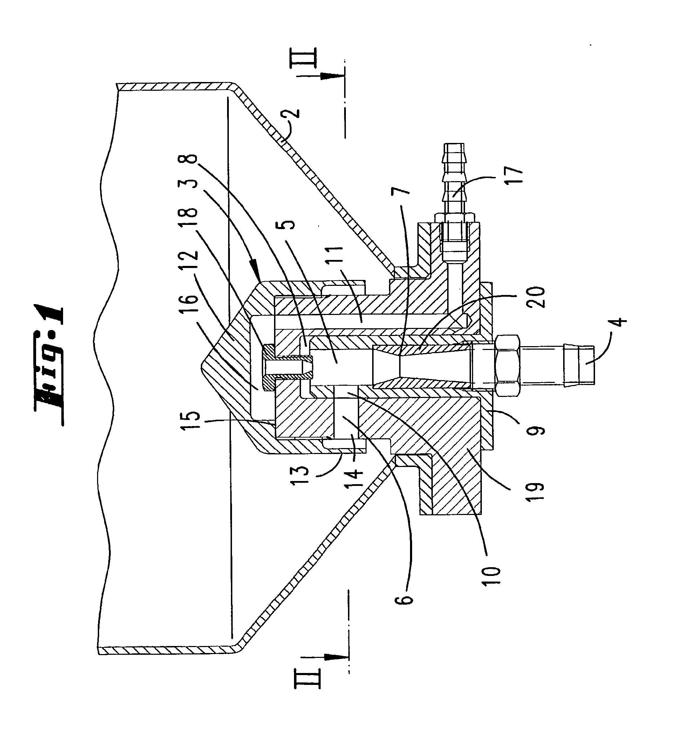

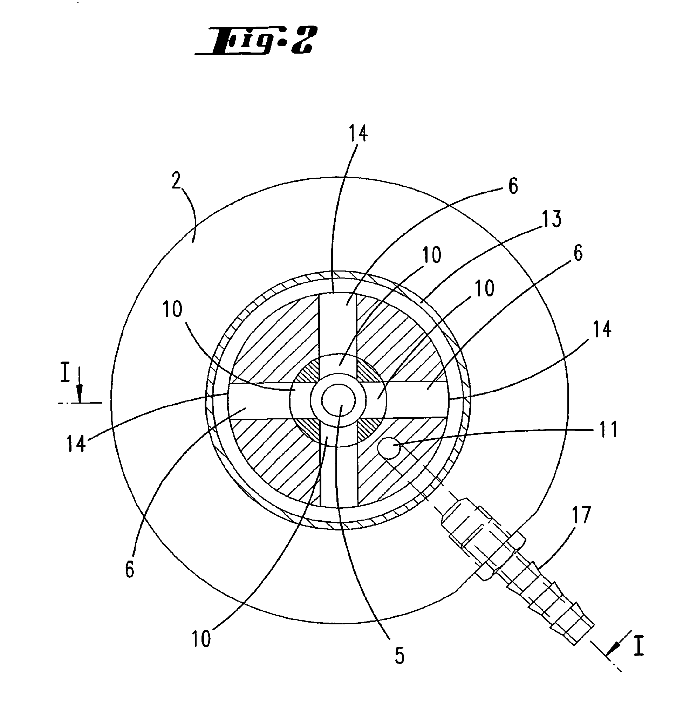

- Fig. 1: die Saugdüsenanordnung mitbodenseitigem Teil des Vorratsbehälters im Schnitt gemäß der Linie I-I in Figur 2 und
- Fig. 2: einen Schnitt der Linie II-II in Figur 1.

Das Ausführungsbeispiel betrifft eine Austragungsvorrichtung für eine Sandstreueinrichtung eines Schienenfahrzeugs zum Dosieren und Austragen des Streugutes. Als Streugut wird insbesondere trockener Sand verwendet. Dieser wird unmittelbar vor die Räder des Schienenfahrzeuges geleitet. Die Vorrichtung besteht aus einem Grundkörper 19, der in eine bodenseitige Öffnung eines Sandvorratsbehälters 1 einsetzbar ist. Der Sandvorratsbehälter 1 besitzt einen trichterförmigen Boden 2. Der größte Bereich des Grundkörpers 9 liegt innerhalb des Vorratsbehälters 1. In der Mitte besitzt der Grundkörper 19 eine nach unten hin offene Höhlung 8. Der nach oben weisende Boden der Höhlung 8 besitzt ein Einschraubgewinde, in welches eine Druckluftdüse 18 eingeschraubt ist. Oberhalb der Druckluftdüse 18 befindet sich ein Umlenkkanal 16.

In diesen Umlenkkanal 16 strömt durch eine Druckluftzuleitung 11, die vertikal nach oben gerichtet ist, Druckluft. Diese Druckluft wird über einen Schlauchanschluss 17, der horizontal ausgerichtet ist, zugeführt. Die Druckluft kann von einem Kompressor erzeugt werden.

Der Umlenkkanal 16 wird von dem Boden 15 einer Kegelkappe 12 ausgebildet. Die Spitze der Kegelkappe ragt dabei über den trichterförmigen Boden 2 hinaus. Der Kegeloberfläche der Kegelkappe 12 schließt sich eine zylinderförmige Außenwandung an. Ein wandstärkenreduzierter Öffnungsrandabschnitt 13 der Kegelkappe 12 überdeckt die Öffnungen 14 von Horizontalkanälen 6. Insgesamt sind vier sternförmig angeordnete Horizontalkanäle 6 vorgesehen, die in die zentrale Höhlung 8 münden. Die Randkante des Öffnungsrandabschnittes 13 liegt tiefer, als das unterste Niveau der Öffnung 14.

In die Höhlung 8 ist ein Einsatzteil 9 eingesetzt. Dieses Einsatzteil hat im Wesentlichen die Form einer Hülse. Sie bildet vier Fenster 10 aus, die jeweils mit einem Saugkanal 6 fluchten. In der Höhlung des Einsatzteiles 9 befindet sich ein weiteres Einsatzteil 20. Dieses Einsatzteil 20 wird von einem Schlauchanschluss in Achsrichtung gehalten. Dieser Schlauchanschluss bildet das Verbindungselement zur Sandförderleitung 4. Das weitere Einsatzteil 20 bildet eine Verengung 7 aus, die in Stromrichtung des aus der Druckluftdüse 18 ausströmenden Druckluftstromes einem Injektionsraum 5 nachgeordnet ist, wobei die Fenster 10 in den Injektionsraum 5 münden.

Durch Drehen des Einsatzteiles 5 können die Fenster 10 teilweise außer Fluchtlage zu den Saugkanälen 6 gebracht werden. Dadurch kann die Saugleistung der Saugdüsenanordnung 3 eingestellt werden. Hierdurch lässt sich der freie Ansaugquerschnitt stufenlos verändern.

Die Funktionsweise der zuvor beschriebenen Vorrichtung ist die Folgende: Der Sandvorratsbehälter 1 ist mit trockenem Sand gefüllt. Die Druckluftzuleitung 11 wird mit Druckluft beaufschlagt. Die Druckluft wird im Umlenkkanal 16 umgelenkt und strömt durch die Druckluftdüse 18 in den Injektionsraum 5. Zufolge der Verengung 7 entsteht im Injektionsraum 5 ein Unterdruck. Dies hat zur Folge, dass sich in den horizontal verlaufenen Kanälen 6 eine Saugströmung ausbildet. Diese Saugströmung wird von dem in den Injektionsraum 5 einströmenden Druckluftstrom senkrecht nach unten umgeleitet. Der Sand wird dann in den Ringraum eingesogen, der sich zwischen dem Öffnungsrandabschnitt 13 und den Kanalöffnungen 14 befindet. Er wird durch den Saugkanal 6 in Horizontalrichtung mit der Saugströmung angesaugt und im Injektionsraum 5 senkrecht nach unten weiter gefördert. Er wird durch die Sandförderleitung 4 bis vor die Räder geleitet.

Sinkt der Füllstand des Sandes unter die Spitze der Kegelkappe, so kann der Sand dort nicht liegen bleiben, da er auf der Kegelmantelfläche nach unten abrutscht. Die Erfindung schafft eine einfache und zugleich robuste Austragseinrichtung für Sand, die eine stufenlose und von außen ausführbare Sandmengeneinstellung ermöglicht. Einem Verstopfen der Einheit wird entgegengewirkt. Dies wird u.a. dadurch erreicht, dass die Sandmenge durch einen einfachen Drehverschluss eingestellt wird. Dem Verstopfen wirkt die senkrechte Anordnung der Austragseinrichtung entgegen. Ein weiterer Vorteil ist das Hineinragen der Austragseinrichtung in den Sandvorratsbehälter 1. Hierdurch wird die Austragseinrichtung baulich gegen alle äußeren Einflüsse geschützt und der benötigte Einbauraum der Austragseinrichtung hat somit kaum Einfluss auf die Gesamthöhe der Sandstreueinrichtung.

Alle offenbarten Merkmale sind (für sich) erfindungswesentlich. In die Offenbarung der Anmeldung wird hiermit auch der Offenbarungsinhalt der zugehörigen/ beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

## Patentansprüche

1. Sandaustragseinrichtung für ein Schienenfahrzeug mit einem Vorratsbehälter (1) zur Aufnahme des Sandes und einer an der tiefsten Stelle eines trichterförmigen Bodens (2) des Vorratsbehälters (1) angeordneten, druckluftbetriebenen Saugdüsenanordnung (3) zum Ansaugen des Sandes und Fördern des Sandes mittels Druckluft durch eine Sandförderleitung (4) vor die Räder des Schienenfahrzeuges, wobei der das Ansaugen des Sandes bewirkende Druckluftstrom vertikal nach unten gerichtet ist und in einem Injektorraum (5) der Saugdüsenanordnung (3) erzeugt wird, der sich innerhalb des Vorratsbehälters befindet, **gekennzeichnet durch** einen oder mehrere in Horizontalrichtung verlaufende, in den Injektionsraum (5) mündende Saugkanäle (6) .

2. Sandaustragseinrichtung nach Anspruch 1, **dadurch gekennzeichnet, dass** die dem Injektionsraum (5) in Druckluftstromrichtung nachgeordnete Verengung (7) der Saugdüse im Übergangsbereich des in den Vorratsbehälter (1) ragenden Abschnitts zum aus dem Vorratsbehälter (1) herausragenden Abschnitt der Saugdüsenanordnung (3) liegt.

3. Sandaustragseinrichtung nach einem der vorhergehenden Ansprüche, **dadurch gekennzeichnet, dass** eine Injektionsraum (5) Teil eines drehbar in einer Höhlung (8) einliegenden Einsatzteiles (9) mit Fenstern (10) ist, wobei die Fenster (10) mit den Saugkanälen (6) fluchten und durch Drehung des Einsatzteiles (9) zur Beeinflussung der Dosierung der ausgetragenen Sandmenge außer Fluchtlage bringbar sind.

4. Sandaustragseinrichtung nach einem der vorhergehenden Ansprüche, **gekennzeichnet durch** eine parallel zum Druckluftstrom verlaufende Druckluftzuleitung (11).

5. Sandaustragseinrichtung nach einem der vorhergehenden Ansprüche, **dadurch gekennzeichnet, dass** ein die Saugdüsenanordnung (3) ausbildendes Gehäuse von einer Kegelkappe (12) überfangen wird, deren zylinderförmiger Öffnungsrandabschnitt (13) vor den saugseitigen Öffnungen (14) der Saugkanäle liegt.

6. Sandaustragseinrichtung nach Anspruch 5, **dadurch gekennzeichnet, dass** der Boden (15) der Höhlung der Kegelkappe (12) einen Druckluftumlenkkanal ausbildet, in welchen die Druckluftzuleitung (11) mündet und aus welchen der das Ansaugen des Sandes bewirkende Druckluftstrom austritt.

7. Sandaustragseinrichtung nach einem der vorhergehenden Ansprüche, **gekennzeichnet durch** einen horizontal ausgerichteten Schlauchanschluss (17) für die insbesondere für einen Kompressor erzeugte Druckluft.

8. Sandaustragseinrichtung nach einem der vorhergehenden Ansprüche, **gekennzeichnet durch** einen vertikalen Schlauchanschluss zum Anschluss der Sandförderleitung (4).

## Claims

1. Sand discharge device for a rail vehicle having a storage receptacle (1) for holding the sand and a pneumatically operated suction nozzle .assembly (3) arranged at the lowermost point of a funnel-shaped bottom (2) of the storage receptacle (1) for drawing in the sand and conveying the sand by means of compressed air through a sand conveying pipe (4) to a point in front of the wheels of the rail vehicle, the compressed air stream which causes the sand to be drawn in being directed vertically downwards and produced in an injector chamber (5) of the suction nozzle assembly (3), which chamber is located within the storage receptacle, **characterised by** one or more suction channels (6) running in a horizontal direction and leading into the injection chamber (5).

2. Sand discharge device according to claim 1, **characterised in that** the narrowing (7) of the suction nozzle, which is arranged behind the injection chamber (5) in the direction of the compressed air stream, is located in the transition region of the section of the suction nozzle assembly (3) extending into the storage receptacle (1), with the section protruding from the storage receptacle (1).

3. Sand discharge device according to any of the preceding claims, **characterised in that** an injection chamber (5) forms part of an insert portion (9) located rotatably in a cavity (8) and having windows (10), the windows (10) being aligned with the suction channels (6) and capable of being brought out of alignment by rotation of the insert portion (9) to influence proportioning of the quantity of sand discharged.

4. Sand discharge device according to any of the preceding claims, **characterised by** a compressed air supply pipe (11) running parallel to the compressed air stream.

5. Sand discharge device according to any of the preceding claims, **characterised in that** a housing forming the suction nozzle assembly (3) is encased by a cone cap (12) of which the cylindrical opening edge section (13) is located in front of the openings (14) of the suction channels on the suction side.

6. Sand discharge device according to claim 5, **characterised in that** the bottom (15) of the cavity of the cone cap (12) forms a compressed air deflecting channel into which the compressed air supply pipe (11) leads and from which emerges the compressed air stream which causes the sand to be drawn in.

7. Sand discharge device according to any of the preceding claims, **characterised by** a horizontally oriented hose connection (17) for the compressed air which is generated in particular for a compressor.

8. Sand discharge device according to any of the preceding claims, **characterised by** a vertical hose connection for connection of the sand conveying pipe (4).

## Revendications

1. Dispositif de sablage pour un véhicule ferroviaire comportant un réservoir (1) pour le stockage du sable et un dispositif à buse d'aspiration (3) à air comprimé disposé sur le point le plus profond d'un fond (2) en entonnoir du réservoir (1), pour le pompage du sable et le refoulement du sable au moyen d'air comprimé via une conduite de refoulement de sable (4) en amont des roues du véhicule ferroviaire, le flux d'air comprimé provoquant l'aspiration du sable étant dirigé verticalement vers le bas et généré dans une chambre d'injecteur (5) du dispositif à buse d'aspiration (3), laquelle se trouve à l'intérieur du réservoir, **caractérisé par** un ou plusieurs canaux d'aspiration (6) s'étendant en direction horizontale et débouchant dans la chambre d'injecteur (5).

2. Dispositif de sablage selon la revendication 1, **caractérisé en ce que** l'étranglement (7) de la buse d'aspiration en aval de la chambre d'injecteur (5) dans la direction du flux d'air comprimé est situé dans la zone de transition entre le tronçon du dispositif à buse d'aspiration (3) pénétrant dans le réservoir (1) et le tronçon dépassant du réservoir (1).

3. Dispositif de sablage selon l'une des revendications précédentes, **caractérisé en ce qu'**une chambre d'injection (5) fait partie d'une pièce de garniture (9) pourvue de fenêtres (10) insérée de manière rotative dans une cavité (8), les fenêtres (10) étant alignées sur les canaux d'aspiration (6) et pouvant être décalées de la position d'alignement par rotation de la pièce de garniture (9) pour influencer le dosage de la quantité de sable déversé.

4. Dispositif de sablage selon l'une des revendications précédentes, **caractérisé par** une conduite d'amenée d'air comprimé (11) s'étendant parallèlement au flux d'air comprimé.

5. Dispositif de sablage selon l'une des revendications précédentes, **caractérisé en ce qu'**un carter formant le dispositif à buse d'aspiration (3) est couvert par une coiffe conique (12) dont la partie de bord d'ouverture (13) cylindrique est située en amont des ouvertures (14) des canaux d'aspiration côté aspiration.

6. Dispositif de sablage selon la revendication 5, **caractérisé en ce que** le fond (15) de la cavité de la coiffe conique (12) forme un canal de dérivation de l'air comprimé où débouche la conduite d'amenée d'air comprimé (11) et hors duquel s'écoule le flux d'air comprimé provoquant l'aspiration du sable.

7. Dispositif de sablage selon l'une des revendications précédentes, **caractérisé par** un raccord de tuyau (17) s'étendant en direction horizontale pour l'air comprimé généré notamment pour un compresseur.

8. Dispositif de sablage selon l'une des revendications précédentes, **caractérisé par** un raccord de tuyau s'étendant en direction verticale pour le raccordement de la conduite de refoulement de sable (4).
